(19) Europäisches Patentamt
European Patent Office
Office européen des brevets

(11) Veröffentlichungsnummer: **0 224 179 B1**

(12) # EUROPÄISCHE PATENTSCHRIFT

(45) Veröffentlichungstag der Patentschrift: **15.05.91**

(51) Int. Cl.$^5$: **C08F 4/06**, C08F 2/06

(21) Anmeldenummer: **86115956.4**

(22) Anmeldetag: **18.11.86**

Die Akte enthält technische Angaben, die nach dem Eingang der Anmeldung eingereicht wurden und die nicht in dieser Patentschrift enthalten sind.

(54) **Verfahren zur Herstellung von Polymeren mit reaktiven Endgruppen.**

(30) Priorität: **28.11.85 DE 3542000**

(43) Veröffentlichungstag der Anmeldung:
**03.06.87 Patentblatt 87/23**

(45) Bekanntmachung des Hinweises auf die Patenterteilung:
**15.05.91 Patentblatt 91/20**

(84) Benannte Vertragsstaaten:
**DE FR GB IT**

(56) Entgegenhaltungen:
**EP-A- 0 175 122**
**EP-A- 0 224 759**
**FR-A- 1 441 610**
**FR-A- 1 508 766**
**US-A- 3 963 772**
**US-A- 4 113 790**
**US-A- 4 276 394**

(73) Patentinhaber: **BAYER AG**

**W-5090 Leverkusen 1 Bayerwerk(DE)**

(72) Erfinder: **Musch, Rüdiger, Dr.**
**Altenberger Domstr. 169**
**W-5060 Bergisch Gladbach 2(DE)**
Erfinder: **Pask, Steven, Dr.**
**Goethestr. 57 D**
**W-4047 Dormagen(DE)**
Erfinder: **Mottweiler, Renke, Dr.**
**Carl Rumpff-Str. 47**
**W-5090 Leverkusen(DE)**
Erfinder: **Nuyken, Oskar, Prof. Dr.**
**Ignatz Günther-Str. 12**
**W-8000 München 81(DE)**
Erfinder: **Dittmer, Thomas**
**Zunftstr. 22**
**W-8013 Haar(DE)**
Erfinder: **Mühlbauer, Hans-Peter**
**Birkenstr. 9**
**W-8133 Feldafing(DE)**

**EP 0 224 179 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur kontinuierlichen Herstellung von makromolekularen Stoffen mit endständigen reaktiven Gruppen durch kationische Polymerisation von kationisch polymerisierbaren Monomeren in Gegenwart von Metallhalogeniden (Katalysator) und bestimmten Halogenkohlenwasserstoffen (Inifer).

Ein Reaktionssystem, das durch kationische Polymerisation Produkte mit zwei reaktiven Endgruppen, sogenannte Telechele, liefert, wird von J.P. Kennedy in J. Polym. Sci., Polymer Chem. Ed. 18, 1523 (1980) beschrieben. Solche Makromoleküle mit definierten Endgruppen sind ausgezeichnete Präpolymere für die Herstellung von maßgeschneiderten Copolymeren mit bekannter, einstellbarer Blocklänge.

Bei der von Kennedy beschriebenen sogenannten Inifer-Methode ist aufgrund der hohen Polymerisationsgeschwindigkeit auch bei tiefen Temperaturen eine exakte Temperaturfürung während der Polymerisation nicht möglich. Es ist daher von technischem Interesse, die Polymerisation bei möglichst konstanter Temperatur durchzuführen, weil die Reaktionstemperatur den Funktionalitätsgrad der Reaktionsprodukte entscheidend beeinflußt. Weiterhin ist die Vernichtung des Katalysators nach der Polymerisation z.B. durch Methanol aus ökologischen und wirtschaftlichen Gründen unerwünscht.

Der Erfindung liegt daher die Aufgabe zugrunde, ein Verfahren zur Herstellung von Telechelen aufzufinden, ohne daß die obengenannten Nachteile auftreten. Weiterhin soll ein homogenes, von Katalysatorresten freies Polymerisat nach wirtschaftlich einfacher und sicherer Verfahrensweise hergestellt werden.

Die Aufgabe wird dadurch gelöst, daß man die Reaktionskomponenten, Monomer, Katalysator und Inifer, gegebenenfalls in einem inerten Lösungsmittel gelöst, kontinuierlich in der Weise in eine kontinuierlich arbeitende Polymerisationsapparatur eindosiert, daß eine Vermischung der drei Komponenten erst in der Apparatur stattfindet, kontinuierlich die Polymerlösung aus den Apparaten entfernt, die Polymerlösung von Restmonomeren, nicht umgesetztem Inifer und vom Katalysator befreit und aufarbeitet.

Gegenstand der Erfindung ist daher ein Verfahren zur Herstellung von Polymeren mit Halogenendgruppen aus kationisch polymerisierbaren Monomeren mit Hilfe eines Metallhalogenids mit einem Siedepunkt unter 50 °C bei Normaldruck als Katalysator und einem organischen Halogenid der allgemeinen Formel

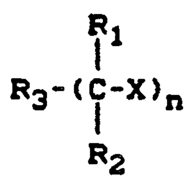

wobei

| | |
|---|---|
| X | Halogen ist, |
| n | eine ganze Zahl 1, 2, 3 oder 4 bedeutet, |
| $R_1$ und $R_2$ | $C_5$- bis $C_{10}$-Cycloalkyl oder geradkettiges oder verzweigtes $C_1$- bis $C_{20}$-Alkyl und |
| $R_3$ | n-wertiges $C_5$- bis $C_{10}$-Cycloalkyl, n-wertiges geradkettiges oder verzweigtes $C_1$- bis $C_{20}$-Alkyl, oder n-wertiges Aryl bedeuten, |

und das organische Halogenid (Inifer) 5 bis 50 C-Atome besitzt und in Konzentrationen von $10^{-1}$ bis $10^{-6}$ Mol pro Mol Monomer vorliegt, während das Metallhalogenid im 1,1- bis 100-fachen molaren Überschuß, bezogen auf Halogenatome des organischen Halogenids, zugesetzt wird, bei Temperaturen von +10 bis -130 °C in einem inerten organischen Lösungsmittel oder Lösungsmittelgemisch, dadurch gekennzeichnet, daß man die Reaktionskomponenten Monomer, Katalysator und Inifer, gegebenenfalls in einem inerten organischen Lösungsmittel gelöst, kontinuierlich in der Weise in eine Polymerisationsapparatur eindosiert, daß eine Vermischung aller drei Komponenten erst in der Apparatur stattfindet, kontinuierlich die Polymerlösung aus der Apparatur entfernt, die Polymerlösung von Restmonomer, nicht umgesetztem Inifer und vom Katalysator befreit und aufarbeitet.

Geeignete Reaktoren werden in der Monographie von H. Güterbock, Polyisobutylen und Isobutylen-Mischpolymerisate, Springer Verlag 1959 beschrieben.

Als Monomere kommen für das erfindungsgemäße Verfahren kationisch polymerisierbare Monomere von Typ 1-Buten, 2-Methylbuten, 4-Methyl-1-penten oder Vinylcyclohexan in Frage, wie sie in der Monographie: "Cationic polymerization of olefins" von J.P. Kennedy, J, Wiley u. Sons, New York in Tabelle 1, abschnitt 1a-d, 39-41 beschrieben worden sind, also auch Vinylether, z.B. Isobutylvinylether. Bevorzugtes Monomer ist Isobuten.

Bevorzugter Katalysator ist $BCl_3$.

Bevorzugte Inifer sind solche, die an den C-Atomen α-ständig zu den Halogenatomen keine Wasserstoffatome und an den β-ständigen C-Atomen keine oder wenigstens zwei Wasserstoffatome tragen.

Besonders bevorzugt sind 2,5-Dichlor-2,5-dimethylhexan, 9,14-Dichlor-9,14-di-n-heptyl-docosan, 2,5,8-Trichlor-2,5,8-trimethylnonan, 2-Chlor-2,3,3-trimethylbutan, 2-Chlor-2,4,4,6,6-pentamethylheptan, 2-Chlor-2-methylethylbenzol, p-Di-(α,α-dimethyl-chlormethyl)benzol, 1,3,5-Tri-(α,α-dimethylchlormethyl)benzol.

Man polymerisiert vorzugsweise bei 0 bis -60 °C in niedrigsiedenden Lösungsmitteln. Als geeignete Lösungsmittel kommen z.B. gesättigte Kohlenwasserstoffe wie Ethan, Propan, Butan oder Pentan sowie Chlorkohlenwasserstoffe wie Methylchlorid oder Methylenchlorid oder Mischungen davon in Betracht. Bevorzugt werden Lösungsmittelgemische, deren Komponenten in ihren Siedepunkten mindestens 50 °C voneinander entfernt liegen.

Die Aufarbeitung wird zweckmäßigerweise wie folgt durchgeführt:
Nachdem das Monomere zu nahezu 100 % umgesetzt worden ist, wird die Polymerlösung kontinuierlich abgezogen und in einem nachgeschalteten Entspannungsgefäß unter leichtem Vakuum erwärmt. Unterdruck und Temperatur werden so gesteuert, daß im Falle eines Lösungsmittelgemisches das niedriger siedende Lösungsmittel, der Katalysator sowie evtl. noch vorhandenes Monomer gasförmig abgezogen und getrennt kondensiert werden. Die Kondensate werden in einer Destillationskolonne fraktioniert. Die Rückströme werden anschließend durch die üblichen Reinigungsmittel von anhaftenden Verunreinigungen befreit, wobei besonders darauf zu achten ist, daß das Metallhalogenid frei von Monomerspuren ist und das Rückmonomer kein Metallhalogenid mehr enthält. In beiden Fällen würden Spuren von mitgerissenem organischem Halogenid die Polymerisation des Monomeren auslösen und gerade bei kontinuierlich beschriebenen Anlagen schnell zu Verstopfungen in den Rohrleitungen führen. Das Polymere gelöst im höhersiedenden Lösungsmittel wird aus dem Entspannungsgefäß abgezogen und aufgearbeitet. Die Rückströme werden der Polymerisationsapparatur wieder zugeführt.

## Beispiele

A. Herstellung der aromatischen Halogenverbindungen

p-Di-(α,α-dimethyl-chlormethyl)benzol (Dicumylchlorid)

Die Herstellung erfolgte nach der Vorschrift von J.P. Kennedy und R.A. Smith, J. Polymer Sci., Polym. Chem. Ed. 18, 1523-37 (1980).

B. Herstellung der aliphatischen Halogenverbindung

2,5-Dichlor-2,5-dimethylhexan

15 ml 2,5-Dimethyl-1,5-hexadien wurde in 150 ml $CH_2Cl$ gelöst auf -30 °C abgekühlt und mit einer Mischung von 20 ml Thionylchlorid und 10 ml $H_2O$ tropfenweise versetzt. Danach erwärmte man die Mischung auf 0 °C und wusch sie nach 2,5 Stunden mit kalter 1 gew.-%iger wäßriger $K_2CO_3$-Lösung, danach mit eiskaltem Wasser. Das Produkt wurde über $MgSO_4$ getrocknet und destilliert. Ausbeute 81 %, Schmp.: 64 °C.

C. Durchführung der Polymerisation

C.1 Bestimmung des mittleren Polymerisationsgrades und der Funktionalität

Die Bestimmung des mittleren Polymerisationsgrades DPn erfolgte mit Hilfe der GPC. Es wurde ein Du Pont 830 HPLC-Gerät verwendet mit der Säulenanordnung 500 A, $10^4$ A und $10^6$ A sowie THF als Laufmittel. Als Eichsubstanzen wurden Polystyrol-Standards eingesetzt. Bei einer völlig störungsfreien Polymerisation soll der so ermittelte Polymerisationsgrad DPn dem theoretischen Wert DPth entsprechen und die Beziehung DPn/DPth = 1 sein.

Die Funktionalität der Telechele wurde durch 1H-NMR-Messungen ermittelt, indem man die Intensitäten der Resonanzsignale aromatischer Protonen von (I) mit den endständigen aliphatischen Methylprotonen von (II) verglich.

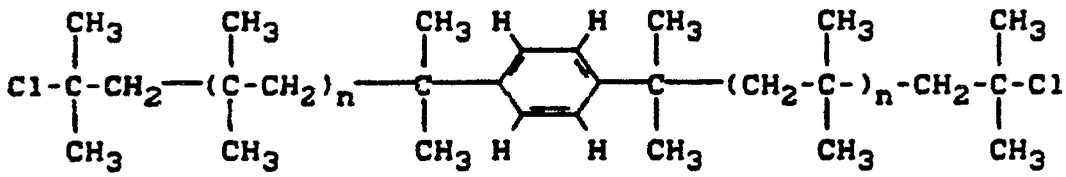

II III I III II

Sie sollen bei einer Funktionalität von 2 im vorliegenden Fall im Verhältnis 1:3 liegen.

Die Funktionalität der durch aliphatische Halogenverbindungen, bei denen die Komponente I also fehlt, gestarteten Telechele wurde aus dem Intensitätsverhältnis endständiger Methylprotonen II, den Methylenprotonen III und dem Molekulargewicht $M_n$ (GPC) ermittelt.

C.2 Kontinuierliche Polymerisation mit Dicumylchlorid als Initiator

Die Versuche wurden in einer 2-Kessel-Anlage durchgeführt. Drei vorgekühlte Produktströme wurden mit Hilfe von Membranpumpen in den ersten Reaktionskessel von unten eindosiert, über Kopf abgezogen und in den zweiten Reaktionskessel ebenfalls von unten eindosiert. Nach einer mittleren Verweilzeit von 30 min wurde das Produkt in einen temperierbaren Entgasungstrakt gepumpt, der unter einem Vakuum von 0,1 bar stand. Methylenchlorid, $BCl_3$ und das restliche Monomer konnten hier gasförmig abgezogen werden. In einem zweiten Verdampfer erfolgte die Entfernung des $BCl_3$ bei höherer Temperatur, wobei ein Teil des Lösungsmittels Hexan mit überging. Die Gase wurden verflüssigt von HCl und Monomerspuren durch fraktionierte Destillation gereinigt und danach der Polymerisationszone erneut zugeführt.

**Polymerisationsbedingungen**

| | Verbrauch (ml/h) |
|---|---|
| 1. Produktstrom: | |
| Isobuten | : 627 |
| 2. Produktstrom: | |
| Dicumylchlorid | : 29 |
| Hexan | : 730 |

| | Verbrauch (ml/h) |
|---|---|
| 3. Produktstrom: | |
| $BCl_3$ | : 49 |
| $CH_3Cl$ | : 5840 |
| Hexan | : 730 |

Kesselgröße: 2 l

Mittlere Verweilzeit: 30 Minuten

Reaktionstemperatur: -28° C

Nach einer Laufzeit von 2 Stunden erhielt man ein Produkt mit einem Molekulargewicht von 3500 ± 5 %, mit einem DPn/DPth Wert von 1,1, einer Funktionalität von 1,9 ± 0,2 und einer Ausbeute von 90

%.

C.3 Kontinuierliche Polymerisation mit 2,5-Dichlor-2,5-dimethylhexan als Initiator

Man verfährt wie im Beispiel C.2, nur wird Dicumylchlorid durch 0,36 g 2,5-Dichlor-2,5-dimethylhexan (0,002 mol) ersetzt. Hier erhielt man nach einer Laufzeit von 2 Stunden ein Produkt mit einem Molekulargewicht von 3000 ± 5 %, einer Ausbeute von 95 %, einem $DP_n/DP_{th}$ von 1,0 und einer Fuktionalität von 2,0 ± 0,1.

D. Diskontinuierliche Polymerisation (Vergleichsversuche)

Die Polymerisation wurde in einer Hochvakuumapparatur aus Glas durchgeführt, indem man Isobuten und Inifer in Methylchlorid löste, die Mischung auf die gewünschte Temperatur abkühlte und $BCl_3$ zugab. Die Durchführung der Polymerisation und die Aufarbeitung der Produkte erfolgte nach Makromol. Chem. 184, 553-562 (1983).

Experimentelle Bedingungen

| | |
|---|---|
| Initiator (Dicumylchlorid) | 1, $\cdot 10^{-3}$ mol |
| Isobuten | 0,05 mol |
| Lösungsmittel $CH_3Cl$ | 40 ml |
| Reaktionstemperatur | -30° C |
| Reaktionszeit | 30 Minuten |
| $BCl_3$ | 0,01 mol |

Das Produkt zeigte eine deutlich breitere Molekulargewichtsverteilung, hervorgerufen durch niedermolekulare Anteile. Das mittlere Molekulargewicht betrug 3200, die Funktionalität 1,85 ± 0,2 und die Ausbeute 85 %.

## Ansprüche

1. Verfahren zur Herstellung von Polymeren mit Halogenendgruppen aus kationisch polymerisierbaren Monomeren mit Hilfe eines Metallhalogenids mit einem Siedepunkt unter 50° C bei Normaldruck als Katalysator und einem organischen Halogenid der allgemeinen Formel

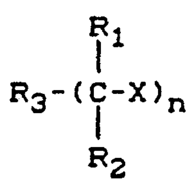

wobei

| | |
|---|---|
| X | Halogen ist, |
| n | eine ganze Zahl 1, 2, 3 oder 4 bedeutet, |
| $R_1$ und $R_2$ | $C_5$-bis $C_{10}$-Cycloalkyl oder geradkettiges oder verzweigtes $C_1$- bis $C_{20}$-Alkyl und |
| $R_3$ | n-wertiges $C_5$-bis $C_{10}$-Cycloalkyl, n-wertiges geradkettiges oder verzweigtes $C_1$- bis $C_{20}$-Alkyl oder n-wertiges Aryl bedeuten, |

und das organische Halogenid 5 bis 50 C-Atome besitzt und in Konzentrationen von $10^{-1}$ bis $10^{-6}$ Mol pro Mol Monomer vorliegt, während das Metallhalogenid im 1,1- bis 100-fachen molaren Überschuß, bezogen auf Halogenatome des organischen Halogenids, zugesetzt wird, bei Temperaturen von +10 bis -130 °C in einem inerten organischen Lösungsmittel oder Lösungsmittelgemisch, dadurch gekennzeichnet, daß man die Reaktionskomponenten Monomer, Katalysator und organisches Halogenid, gegebenenfalls in einem inerten organischen Lösungsmittel gelöst, kontinuierlich in der Weise in eine Polymerisationsapparatur eindosiert, daß eine Vermischung aller drei Komponenten erst in der Apparatur stattfindet, kontinuierlich die Polymerlösung aus der Apparatur entfernt, die Polymerlösung von Restmonomer, nicht umgesetztem organischem Halogenid, vom Lösungsmittel und Katalysator befreit und aufarbeitet.

**2.** Verfahren nach Anspruch 1, dadurch gekennzeichnet, daß man als Monomer Isobutylen einsetzt.

**3.** Verfahren nach Anspruch 1, dadurch gekennzeichnet, daß man als Katalysator $BCl_3$ einsetzt.

**4.** Verfahren gemäß Anspruch 1, dadurch gekennzeichnet, daß man bei Temperaturen von -10 bis -60 °C arbeitet.

**5.** Verfahren gemäß Anspruch 1, dadurch gekennzeichnet, daß man Dicumyl- und Tricumylchlorid als organisches Halogenid einsetzt.

**6.** Verfahren gemäß Anspruch 1, dadurch gekennzeichent, daß man aliphatische Halogenide als organisches Halogenid einsetzt.

**7.** Verfahren nach Anspruch 1, dadurch gekennzeichnet, daß man die Rückströme von Katalysator, Lösungsmittel und gegebenenfalls organischem Halogenid der Polymerisation zuführt, nachdem sie durch die üblichen Reinigungsmittel von anhaftenden Verunreinigungen befreit worden sind.

## Claims

**1.** A process for the preparation of polymers containing halogen end groups from cationically polymerisable monomers with the aid of a metal halide having a boiling point below 50 °C at normal pressure as catalyst and an organic halide corresponding to the following general formula

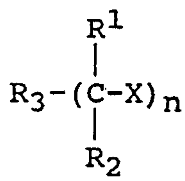

wherein

| | |
|---|---|
| X | denotes halogen, |
| n | denotes the integer 1, 2, 3 or 4, |
| $R_1$ and $R_2$ | denote $C_5$- to $C_{10}$-cycloalkyl or straight chained or branched $C_1$-$C_{20}$-alkyl and |
| $R_3$ | denotes n-valent $C_5$-$C_{10}$-cycloalkyl, n-valent straight chained or branched $C_1$-$C_{20}$-alkyl or n-valent aryl, |

and the organic halide has 5 to 50 carbon atoms and is present at concentrations of from $10^{-1}$ to $10^{-6}$ mol per mol of monomer while the metal halide is added in a 1.1 to 100 times molar excess, based on the halogen atoms of the organic halide, at temperatures from 10 °C to -130 °C in an inert organic solvent or solvent mixture, characterised in that the reaction components comprising monomer, catalyst and organic halide, optionally dissolved in an inert organic solvent, are continuously introduced into a polymerisation apparatus in such a manner that the three components do not mix until they enter the apparatus, the polymer solution is continuously removed from the apparatus, and the polymer solution is freed from residual monomer, unreacted organic halide, solvent and catalyst and is worked up.

2. A process according to Claim 1, characterized in that the monomer used is isobutylene.

3. A process according to Claim 1, characterized in that the catalyst used is $BCl_3$.

4. A process according to Claim 1, characterized in that temperatures from -10° C to -60° C are employed.

5. A process according to Claim 1, characterized in that the dicumyl chloride and tricumyl chloride are used as organic halide.

6. A process according to Claim 1, characterized in that aliphatic halides are used as organic halide.

7. A process according to Claim 1, characterized in that the backflows of catalyst, solvent and optionally organic halide are delivered to the polymerisation after they have been freed from impurities adhering to them by means of conventional purifying agents.

## Revendications

1. Procédé de production de polymères porteurs de groupes terminaux halogéno à partir de monomères polymérisables par voie cationique à l'aide d'un halogénure métallique ayant un point d'ébullition inférieur à 50° C à la pression normale comme catalyseur et d'un halogénure organique de formule générale

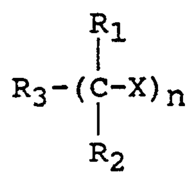

dans laquelle

| | |
|---|---|
| X | est un halogène, |
| n | est un nombre entier égal à 1, 2, 3 ou 4, |
| $R_1$ et $R_2$ | sont des groupes cycloalkyle en $C_5$ à $C_{10}$ ou des groupes alkyle en $C_1$ à $C_{20}$ à chaîne droite ou ramifiée et |
| $R_3$ | est un groupe cycloalkyle en $C_5$ à $C_{10}$ de valence n, un groupe alkyle en $C_1$ à $C_{20}$ à chaîne droite ou ramifiée de valence n ou un groupe aryle de valence n, |

et l'halogénure organique possède 5 à 50 atomes de carbone et est présent à des concentrations de $10^{-1}$ à $10^{-6}$ mole par mole de monomère, tandis que l'halogénure métallique est ajouté en un excès molaire de 1,1 à 100, par rapport aux atomes d'halogènes de l'halogénure organique, à des températures de +10 à -130° C dans un solvant organique inerte ou un mélange de tels solvants, caractérisé en ce qu'on dissout les composants réactionnels, monomère, catalyseur et halogénure organique, éventuellement dans un solvant organique inerte, on charge la solution en continu dans un appareil de polymérisation de manière qu'un mélange des trois composants ne s'effectue que dans l'appareil, on décharge en continu la solution de polymère de l'appareil, on débarrasse la solution de polymère du monomère restant, de l'halogénure organique n'ayant pas réagi, du solvant et du catalyseur, et on en effectue le traitement final.

2. Procédé suivant la revendication 1, caractérisé en ce qu'on utilise l'isobutylène comme monomère.

3. Procédé suivant la revendication 1, caractérisé en ce qu'on utilise $BCl_3$ comme catalyseur.

4. Procédé suivant la revendication 1, caractérisé en ce qu'on opère à des températures de -10 à -60° C.

5. Procédé suivant la revendication 1, caractérisé en ce qu'on utilise le chlorure de dicumyle et de tricumyle comme halogénure organique.

6. Procédé suivant la revendication 1, caractérisé en ce qu'on utilise comme halogénure organique des halogénures aliphatiques.

7. Procédé suivant la revendication 1, caractérisé en ce qu'on fait arriver les courants de reflux de catalyseur, de solvant et, le cas échéant, d'halogénure organique à la polymérisation, après qu'ils ont été débarrassés des impuretés présentes par les agents épurateurs classiques.